# EUROPÄISCHE PATENTSCHRIFT

(11) **EP 0 571 873 B1**
(45) Veröffentlichungstag und Bekanntmachung des Hinweises auf die Patenterteilung: **17.04.1996**
(21) Anmeldenummer: 93108062.6
(22) Anmeldetag: 18.05.1993
(51) Int. Cl.: A01G 17/02

(54) **Vorrichtung zum Ablösen von Pflanzenteilen von einem Drahtrahmen**
Apparatus for removing parts of plants from a cable frame
Appareil pour détacher des parties de plantes d'une structure de support à base de câbles

(30) Priorität: 25.05.1992 DE 9207036 U
(43) Veröffentlichungstag der Anmeldung: 01.12.1993
(73) Patentinhaber: ERO-GERÄTEBAU GmbH, W-6540 Niederkumbd (DE); Barbey, Henry, W-6740 Landau-Godramstein (DE)
(72) Erfinder: Barbey, Henry, W-6740 Landau/Godramstein (DE)
(74) Vertreter: Patentanwälte Dipl.-Ing. F.W. Möll Dipl.-Ing. H.Ch. Bitterich

(56) Entgegenhaltungen:
- FR-A- 2 125 298
- FR-A- 2 437 773
- FR-A- 2 471 739
- NL-A- 8 300 292
- US-A- 4 321 786

## Beschreibung

Die Erfindung betrifft Vorrichtungen zum Ablösen von Pflanzenteilen von einem Haltegerüst, das waagerecht gespannte, parallele Drähte an gegenseitig beabstandeten Pfosten aufweist, wobei die Pflanzenteile mit ihren Ranken an den Drähten festhängen, insbesondere zum Entranken von Weinreben vor dem Rückschnitt.

Insbesondere im Weinbau werden die Reben in Langen, geraden, gegenseitig beabstandeten Reihen gepflanzt. Drahtrahmen, bestehend aus einer Mehrzahl von parallel zum Boden gespannten Drähten an gegenseitig beabstandeten Pfosten, bieten den nötigen Halt während des Wachstums im Frühjahr und Sommer. Dieser Halt wird bewirkt durch die Ranken der Reben, die sich korkenzieherartig um die Drähte wickeln.

Im Winter werden die Reben zurückgeschnitten. Das abgeschnittene, überflüssige Holz muß dabei aus dem Drahtrahmen herausgezogen werden. Hierzu muß der Winzer kräftig an den abgeschnittenen Reben zerren, bis die Ranken abreißen. Insbesondere bei stark rankenden Rebsorten wie Ortega oder Riesling sind hierzu erhebliche Kräfte erforderlich. Diese Arbeit ist stark ermüdend und kann nur von kräftigen Personen durchgeführt werden.

Man hat versucht, das Problem des Entrankens mit Hilfe des sogenannten Kordon-Schnittes zu umgehen. Hierbei werden lediglich die Zwischenräume zwischen den Rahmendrähten freigeschnitten, die Ranken und die mit diesen verbundenen Holzteile bleiben im Drahtrahmen. Diese Schneidetechnik läßt sich daher auch mit maschineller Hilfe durchführen. Der Kordon-Schnitt setzt eine andere Erziehung voraus. Auch ist die Fruchtbarkeit reduziert und die Belüftung verschlechtert, bedingt durch das an den Drähten verbleibende alte Holz.

Der vorliegenden Erfindung liegt die Aufgabe zugrunde, eine Vorrichtung zum maschinellen Ablösen der Ranken von den Rahmendrähten anzugeben, die die Arbeit schnell, sicher, und gleichzeitig schonend für die Pflanzenteile und die Drähte, erledigt.

Diese Aufgabe wird gelöst durch eine gattungsgemäße Vorrichtung mit den Merkmalen gemäß Kennzeichen des Anspruchs 1.

Damit ergeben sich die Vorteile, daß die Vorrichtung einfach und damit preiswert ist, somit von jedem Winzer, dessen Weinberge maschinell bearbeitet werden können, erworben und eingesetzt werden kann, daß das manuelle Herausziehen der Reben und das Abreißen der Ranken völlig entfallen und daß die Reben schon vor dem Rückschnitt frei neben dem Drahtrahmen stehen, so daß das abgeschnittene Holz von selbst auf den Boden fällt. Dank der elastischen Nachgiebigkeit der Zinken werden Überlastungen und Beschädigungen der Rahmendrähte und der Pfosten vermieden. Viele Versuche haben gezeigt, daß die Zeitersparnis gegenüber der bisherigen Methode 20 bis 30 % beträgt, je nach Rebsorte. Pro Hektar Weinberg beträgt die Zeitersparnis demnach 2 bis 3 Mann-Tage. Bei einer mittleren Betriebsgröße von 12 Hektar ergibt sich demnach eine Zeitersparnis von 24 bis 35 Arbeitstagen.

Als weiterer Vorteil der erfindungsgemäßen Vorrichtung wäre anzuführen, daß mit Hilfe der Zinken bei geeigneter Schrägstellung derselben im selben Arbeitsgang die Fangdrähte ausgehängt werden können. Hierzu kann gemäß einer Weiterbildung an einem Zinken ein Finger angebracht werden, der um ca. 45 Grad nach unten und um ca. 15 Grad in Fahrtrichtung abgewinkelt ist. Wenn man bedenkt, daß der Winzer auf einem Weinberg von 1 Hektar bei einem Reihenabstand von 180 cm immerhin ca. 6 km zu Fuß gehen muß, um die Fangdrähte von Hand auszuhängen, läßt sich die dank der erfindungsgemäßen Vorrichtung erreichbare Reduzierung an Zeitaufwand und körperlicher Anstrengung leicht ermessen.

Schließlich hat sich herausgestellt, daß die mit Hilfe des erfindungsgemäßen Gerätes entrankten und dann zurückgeschnittenen Ruten sich leichter wieder anbinden lassen, weil sie dank des erfindungsgemäßen Rechens schon vorgebogen sind.

Gemäß einer vorteilhaften Ausgestaltung der Erfindung besitzen die Zinken einen Kern aus einem bruchfesten, elastischen Material, insbesondere aus einem Glasfiberstab.

Zwecks besserer Haltbarkeit und ausreichender Stabilität der Zinken empfiehlt es sich, über den Kern eine Rohrhülse zu schieben, insbesondere aus Stahl. Es versteht sich, daß diese Rohrhülse so zu befestigen ist, daß die schon erwähnte begrenzte Elastizität nicht verloren geht.

Eine noch bessere Schonung sowohl der Ruten als auch der Rahmendrähte wird erreicht, wenn eine rohrförmige Walze drehbar auf dem Kern bzw. der schon erwähnten Rohrhülse montiert wird. Dieses Walzenrohr wandelt die Zugkräfte wenigstens teilweise in eine Rollbewegung um, wodurch insbesondere die Augen an den Ruten der Rebstöcke geschont werden.

Eine vorteilhafte Methode zum Befestigen der Zinken am Rechen besteht in der Verwendung einer elastischen Zwischenlage zwischen Zinken und Zinkenhalterung.

Um zu verhindern, daß bei besonders stark rankenden Rebsorten die Zinken überdehnt werden und abbrechen, ist gemäß einer vorteilhaften Weiterbildung der Erfindung ein zusätzlicher Anschlag in Form eines Rohres oder Stabes vorgesehen, der die elastische Ausbiegung der Zinken mechanisch begrenzt.

Eine weitere Schonung der Ruten läßt sich erreichen, wenn der Rechen derart schräg gestellt wird, daß die unteren Zinken in Fahrtrichtung den oberen Zinken nachlaufen. Dadurch werden zuerst die Ranken an den Spitzen der Ruten abgerissen, so daß die Ruten dem Druck der vorfahrenden Zinken elastisch ausweichen können, bis auch die unteren Ranken abreißen.

Eine alternative Ausgestaltung hierzu sieht vor, daß der Rechen derart gekrümmt ist, daß die unteren Zinken in Fahrtrichtung allmählich immer mehr nachlaufen. Diese Variante ermöglicht ein noch gefahrloseres Ausweichen der schon von den Drähten gelösten Rutenteile gegenüber dem vorfahrenden Rechen.

Es versteht sich, daß der Rechen bei jedem die Drähte haltenden Pfosten mit Hilfe des Schwenkzylinders aus dem Drahtrahmen herausgeschwenkt und hinter dem Pfosten wieder in den Drahtrahmen eingeschwenkt werden muß. Um dem Fahrzeugführer die Steuerung zu erleichtern bzw. ganz abzunehmen, empfiehlt es sich, einen Sensor vorzusehen, der das bevorstehende Auflaufen der Zinken auf einen Pfosten erkennt und die Bordhydraulik entsprechend steuert. Dieser Sensor kann beispielsweise ein magnetisch arbeitender Sensor sein, wenn die Pfosten aus Stahl bestehen. Eine solche Vollautomatik gibt auch die Möglichkeit, am Fahrzeug zwei Rechen anzubringen, einen rechts, einen links, und so gleichzeitig zwei Reihen zu entranken. Dies führt zu einer Verdopplung der Arbeitsleistung und zu einer weiteren Reduzierung des Zeitaufwandes.

Diese und weitere Merkmale der Erfindung sollen anhand der Zeichnung in Form von Ausführungsbeispielen näher erläutert werden. Es zeigen
- Fig. 1: ein landwirtschaftliches Fahrzeug mit Rechen in einer Rebzeile als Frontsicht,
- Fig. 2: eine Draufsicht von oben auf die Darstellung der Fig. 1, jedoch ohne Fahrzeug,
- Fig. 3: eine schematische, perspektivische Darstellung einer Rebzeile mit Rechen, jedoch ohne Fahrzeug und
- Fig. 4: einen Längsschnitt durch einen Zinken.

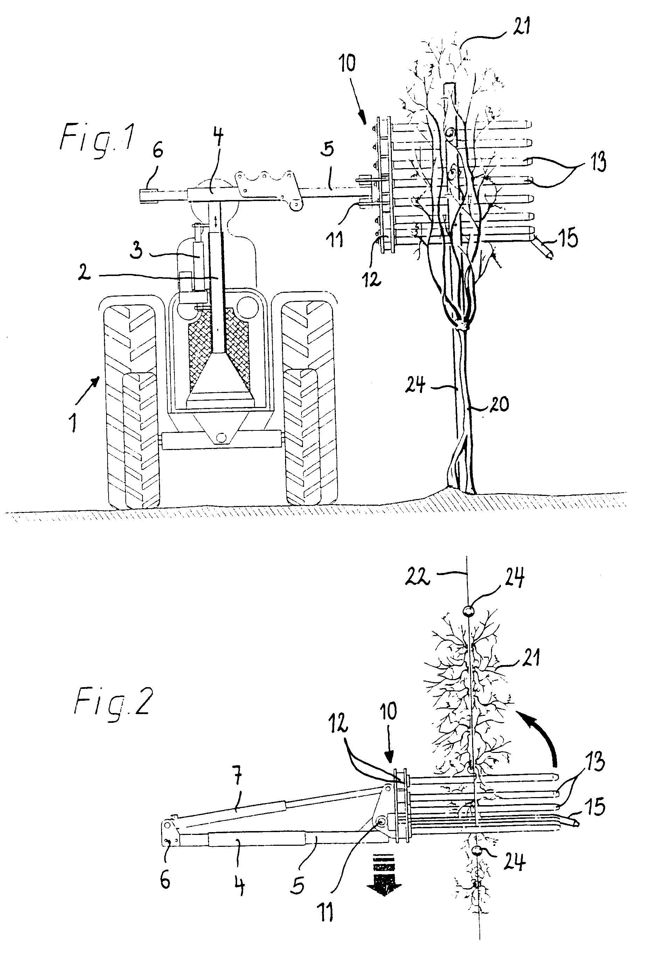

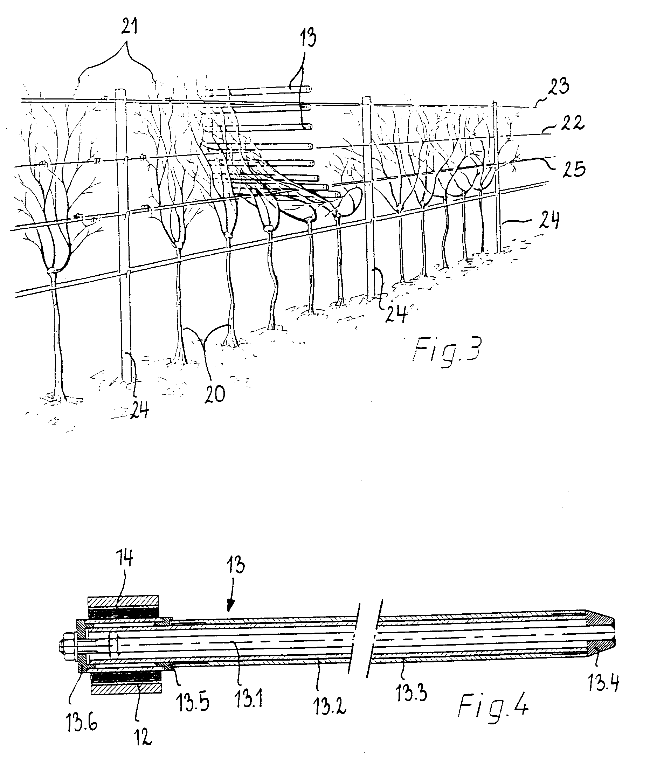

Fig. 1 als Frontsicht, Fig. 2 als Draufsicht (ohne Fahrzeug) und Fig. 3 als Perspektive (ebenfalls ohne Fahrzeug) zeigen eine Rebzeile eines Weinbergs, bestehend aus einer Vielzahl von Rebstöcken 20 mit einer Vielzahl von im Winter blattlosen, mehr oder weniger verholzten Ruten 21. Vorgesehen ist ferner ein sogenannter Drahtrahmen, bestehend aus gegenseitig beabstandeten Pfosten 24, die parallel zum Erdboden gespannte Drähte 22, 23, 25 halten. Die beiden untersten Drähte 22 werden Biegdraht genannt; an ihnen werden im Winter die zurückgeschnittenen Reben bogenförmig angebunden. Weiter erkennt man die Fang- und Heftdrähte 23, 25; sie sind paarweise ausgeführt und dienen dazu, die während der Vegetationsperiode zunehmend länger werdenden Ruten zusammenzuhalten.

Die Ruten selbst halten mit Hilfe ihrer Ranken, die sich korkenzieherartig um die Drähte 22, 23, 25 wickeln, am Drahtrahmen. Nach dem Rückschnitt im Winter müssen die abgeschnittenen Ruten aus dem Drahtrahmen herausgezogen werden. Hierzu muß der Winzer die abgeschnittenen Ruten ergreifen und so fest daran ziehen, daß die Ranken abreißen. Dies ist mit einem erheblichen Zeit- und insbesondere Kraftaufwand verbunden. Bei besonders fest rankenden Sorten wie Ortega oder Riesling müssen die Ranken auch oft mit der Schere abgeschnitten werden.

Anschließend muß der Winzer die Fang- und Heftdrähte 23, 25 aus den Haken an den Pfosten 24 aushängen und auf dem Boden ablegen. Auch diese Arbeit ist mit einigem Aufwand verbunden.

Fig. 1 zeigt nun ein landwirtschaftliches Fahrzeug 1, einen sogenannten Weinbergschlepper, an dessen Frontseite eine mit Hilfe eines Hydraulikzylinders 3 höhenverstellbare Konsole 2 montiert ist. Am oberen Ende der Konsole 2 ist ein Kopfstück 4 lösbar befestigt, das seinerseits einen etwa waagerecht seitlich abstehenden Arm 5 trägt. Am Ende des Arms 5 ist ein senkrechtes Schwenklager 11 angebracht, um das ein Rechen 10 mit Zinken 13 und Zinkenhalterungen 12 schwenkbar ist. Das Schwenken erfolgt mit Hilfe eines speziellen Schwenkzylinders 7 (Fig. 2), der beispielsweise an dem vom Schwenklager 11 abgewandten Ende 6 des Tragarms 5 montiert ist und von der Bordhydraulik des Fahrzeugs 1 gespeist wird.

Der Tragarm 5 ist im Kopfstück 4 verschiebbar zwecks Anpassung des Rechens 10 an unterschiedliche Abstände der Pflanzenreihen.

Die Zinken 13 werden im Bereich der Ruten 21 durch den Drahtrahmen 22, 23, 24, 25 gesteckt. Sobald nun das Fahrzeug 1 vorwärts fährt, geraten die Ruten 21 der Reben 20 unter Druck, die Ranken, mit denen die Ruten an den Drähten 22, 23 verankert sind, reißen ab und die Ruten werden aus dem Drahtrahmen 22, 23 herausgezogen. Dieser Vorgang ist am besten in Fig. 3 zu erkennen. Da die Ruten jetzt frei neben dem Drahtrahmen stehen, fallen sie beim nachfolgenden Schnitt ohne weiteres auf den Boden.

Wie die Fig. 2 und 3 erkennen lassen, sind die Zinken 13 des Rechens 10 nicht einfach senkrecht übereinander angeordnet; vielmehr ist der Rechen 10 entweder schräg gestellt oder aber in sich so gekrümmt, daß die unteren Zinken den oberen Zinken nachlaufen. Dies bedeutet, daß zunächst die Ranken an den oberen Drähten abgerissen werden. Die Spitzen der Ruten 21 können daher dem Druck der Zinken 13 ausweichen, ohne beschädigt, d. h. gebrochen oder abgeknickt zu werden.

Wie schon erwähnt, sind die Fang- und Heftdrähte 23, 25 an Haken seitlich an den Pfosten 24 lose eingehängt. Werden nun die Zinken 13 des Rechens 10 so gestellt, daß ihre Spitzen nach unten zeigen, oder ist ein zusätzlicher Finger 15 vorgesehen, der um ca. 45 Grad nach unten und um ca. 15 Grad in Fahrtrichtung abgewinkelt ist, werden die Drähte während des Entrankens gleichzeitig aus ihren Haken herausgehoben. Der Winzer erspart sich so die spätere mühsame Handarbeit. Die damit verbundene Zeitersparnis ist bedeutend, selbst wenn der eine oder andere Draht nicht aus allen Haken gelöst werden sollte.

Von entscheidender Bedeutung für die einwandfreie Funktion des Rechens 10 und die Schonung der Ruten 21 der Reben 20, insbesondere natürlich der Knospen, ist die Konstruktion der Zinken 13. Ein entsprechendes Ausführungsbeispiel ist in Fig. 4 im Längsschnitt dargestellt. Man erkennt zunächst einen Kern 13.1 aus einem hochfesten, elastisch nachgiebigen Material. Vorzugsweise handelt es sich um einen Glasfiberstab. Über diesen ist mit einigem Abstand ein Metallrohr 13.2 geschoben. Dieses Metallrohr verleiht dem Zinken 13 die nötige Stabilität und Festigkeit, wobei jedoch durch die gewählte Konstruktion sichergestellt ist, daß der Zinken 13 ausreichend elastisch nachgeben kann.

Über das Rohr 13.2 ist drehbar ein zweites Rohrstück 13.3 gesteckt. Die Befestigung der Rohre 13.2, 13.3 erfolgt mit geeigneten Halterungen 13.4 bzw. 13.5 und 13.6.

Fig. 4 zeigt auch die Zinkenhalterung 12, ferner eine hochelastische Zwischenlage 14 zwischen Zinkenhalterung 12 und Zinken 13. Dank der elastisch nachgiebigen Lagerung der Zinken 13, die ihrerseits ebenfalls elastisch, jedoch gleichzeitig auch ausreichend stabil sind, und insbesondere in Verbindung mit dem drehbaren äußeren Rohrstück 13.3 ergibt sich eine sichere und gleichzeitig schonende Kraftübertragung vom Fahrzeug 1 auf die Ruten 21, bis die Ranken abreißen. Insbesondere wird auf diese Weise aber auch sichergestellt, daß beim Auflaufen der Zinken 13 auf die Pfosten 24 weder die Zinken 13 noch die Pfosten 24 beschädigt werden, falls der Fahrzeugführer beim Betätigen des Schwenkzylinders 7 nicht die nötige Vorsicht walten lassen sollte.

Um den Fahrzeugführer von dieser Steuerfunktion zu entlasten, empfiehlt sich ein Sensor, der das bevorstehende Auflaufen des Rechens auf den Pfosten erfaßt und eine entsprechende Steuerbewegung der Bordhydraulik initiiert. Ein solcher Sensor könnte beispielsweise ein Magnetsensor sein, der Stahlpfosten erkennt. Eine solche vollautomatische Steuerung hat den weiteren Vorteil, daß am Fahrzeug zwei Rechen angeordnet werden können, so daß die Arbeitsleistung fast verdoppelt wird.

## Patentansprüche

1. Vorrichtung zum maschinellen Ablösen von Pflanzenteilen (21) von einem Haltegerüst, das parallel zum Erdboden gespannte Drähte (22, 23) an gegenseitig beabstandeten Pfosten (24) aufweist, wobei die Pflanzenteile (21) mit ihren Ranken an den Drähten (22, 23) festhängen, insbesondere zum Entranken von Weinreben vor dem Rückschnitt, gekennzeichnet durch
- einen Rechen (10) mit einer Anzahl von parallelen Zinken (13) übereinander,
- der Rechen (10) ist an einem Schwenklager (11) beweglich befestigt,
- das Schwenklager (11) befindet sich am Ende einer Halterung (4, 5)
- die Halterung (4, 5) ist an einem landwirtschaftlichen Fahrzeug (1) montierbar,
- ein von der Bordhydraulik des Fahrzeugs (1) gespeister Schwenkzylinder (7) schwenkt den Rechen (10) steuerbar um das Schwenklager (11)
- die Zinken (13) sind elastisch nachgiebig gegenüber dem Rechen (10).

2. Vorrichtung nach Anspruch 1, gekennzeichnet durch
- eine Schrägstellung oder Krümmung des Rechens (10) derart, daß die unteren Zinken (13) in Fahrtrichtung nachlaufen.

3. Vorrichtung nach Anspruch 1 oder 2, gekennzeichnet durch
- einen Finger (15) an einem Zinken,
-- um ca. 45 Grad nach unten und um ca. 15 Grad in Fahrtrichtung abgewinkelt.

4. Vorrichtung nach Anspruch 1, 2 oder 3, gekennzeichnet durch
- Zinken (13) mit einem Kern (13.1) aus einem hochfesten elastischen Material, insbesondere einem Glasfiberstab.

5. Vorrichtung nach einem der Ansprüche 1 bis 4, gekennzeichnet durch
- eine Rohrhülse (13.2), insbesondere aus Stahl, über dem Kern (13.1).

6. Vorrichtung nach einem der Ansprüche 1 bis 5, gekennzeichnet durch
- eine rohrförmige Walze (13.3), insbesondere aus Stahl, drehbar montiert auf dem Kern (13.1) bzw. der Rohrhülse (13.2).

7. Vorrichtung nach einem der Ansprüche 1 bis 6, gekennzeichnet durch
- eine elastische Zwischenlage (14) zwischen Zinken (13) und Zinkenhalterung (12).

8. Vorrichtung nach einem der Ansprüche 1 bis 7, gekennzeichnet durch
- einen zusätzlichen Anschlag in Form eines Rohres oder Stabes, der die elastische Biegung der Zinken (13) begrenzt.

9. Vorrichtung nach einem der Ansprüche 1 bis 8, gekennzeichnet durch
- einen am Fahrzeug (1) lösbar zu befestigenden Haltekopf (4),
- einen am Haltekopf (4) befestigten, längenverstellbaren, etwa waagerecht gerichteten Haltearm (5), an dessen einem Ende das Schwenklager (11) sitzt und an dem auch der Schwenkzylinder (7) angreift.

10. Vorrichtung nach einem der Ansprüche 1 bis 9, gekennzeichnet durch
- einen Sensor, der das Auflaufen der Zinken (13) auf einen Pfosten (24) erkennt und eine Schwenkhydraulik steuert.

## Claims

1. An apparatus for mechanically detaching parts of plants (21) from a support structure which has wires (22, 23) stretched parallel to the ground on mutually spaced apart posts (24), wherein the plant parts (21) are attached by their tendrils to the wires (22, 23), in particular for removing tendrils from vines prior to pruning, characterised by
- a rake (10) with a number of parallel tines (13) one above the other,
- the rake (10) is mounted movably on a pivot bearing (11),
- the pivot bearing (11) is disposed at the end of a holder (4, 5),
- the holder (4, 5) can be mounted on an agricultural vehicle (1),
- a pivot cylinder (7), which is supplied by the hydraulic system of the vehicle (1), pivots the rake (10) in a controllable manner about the pivot bearing (11),
- the tines (13) are elastically flexible with respect to the rake (10).

2. An apparatus according to Claim 1, characterised by
- an inclined position or curvature of the rake (10) such that the lower tines (13) trail in travel direction.

3. An apparatus according to Claim 1 or 2, characterised by
- a finger (15) on one tine,
-- angled by about 45° downwards and about 15° in travel direction.

4. An apparatus according to Claim 1, 2 or 3, characterised by
- tines (13) with a core (13.1) of a high-strength elastic material, in particular a glass fibre rod.

5. An apparatus according to any one of Claims 1 to 4, characterised by
- a tubular sleeve (13.2), in particular of steel, over the core (13.1).

6. An apparatus according to any one of Claims 1 to 5, characterised by
- a tubular roller (13.3), in particular of steel, rotatably mounted on the core (13.1) or the tubular sleeve (13.2).

7. An apparatus according to any one of Claims 1 to 6, characterised by
- an elastic spacer (14) between the tines (13) and the tine holder (12).

8. An apparatus according to any one of Claims 1 to 7, characterised by
- an additional stop member in the form of a tube or rod which limits the elastic bending of the tines (13).

9. An apparatus according to any one of Claims 1 to 8, characterised by
- a retaining head (4) to be mounted detachably on the vehicle (1),
- an approximately horizontally directed retaining arm (5) which is longitudinally adjustable and mounted on the retaining head (4), and at the other end of which the pivot bearing (11) is mounted and on which the pivot cylinder (7') also engages.

10. An apparatus according to any one of any one of Claims 1 to 9, characterised by
- a sensor which detects when the tines (13) abut against a post (34) and controls the pivot hydraulics.

## Revendications

1. Dispositif pour détacher mécaniquement des parties de plantes (21) d'une charpente de support, qui présente parallèlement au sol des fils (22, 23) tendus sur des poteaux (24) se tenant à distance réciproque, les parties de plantes (21) étant suspendues avec leurs sarments de manière fixe aux fils (22, 23), en particulier lors de la séparation des sarments des vignes avant la coupe, caractérisé en ce qu'un râteau (10) avec un certain nombre de dents (13) parallèles les unes au-dessus des autres, est fixé de manière mobile à un palier pivotant (11) qui se trouve à l'extrémité d'un support (4, 5), ce dernier pouvant être monté sur un véhicule agricole (1), tandis qu'un vérin pivotant (7) alimenté par l'hydraulique de bord du véhicule (1) fait pivoter le râteau (10) de manière contrôlable autour du palier pivotant (11), les dents (13) étant élastiquement flexibles vis-à-vis du râteau (10).

2. Dispositif selon la revendication 1, caractérisé par une position inclinée ou une courbure du râteau (10) de façon à ce que les dents inférieures (13) se suivent dans le sens de la marche.

3. Dispositif selon la revendication 1 ou 2, caractérisé par un doigt (15) sur une dent, incliné à environ 45 degrés vers le bas et à environ 15 degrés dans le sens de la marche.

4. Dispositif selon la revendication 1, 2 ou 3, caractérisé par des dents (13) avec un noyau (13.1) en matériau élastique à haute résistance, en particulier une tige en fibres de verre.

5. Dispositif selon l'une quelconque des revendications 1 à 4, caractérisé par un manchon tubulaire (13.2), en particulier en acier, placé sur le noyau (13.1).

6. Dispositif selon l'une quelconque des revendications 1 à 5, caractérisé par un cylindre tubulaire (13.3), en particulier en acier, monté de manière rotative sur le noyau (13.1) et le manchon tubulaire (13.2).

7. Dispositif selon l'une quelconque des revendications 1 à 6, caractérisé par une couche intermédiaire élastique (14) entre les dents (13) et le support des dents (12).

8. Dispositif selon l'une quelconque des revendications 1 à 7, caractérisé par un arrêt supplémentaire en forme de tube ou de tige, qui limite la courbure élastique des dents (13).

9. Dispositif selon l'une quelconque des revendications 1 à 8, caractérisé par une tête de maintien (4) à fixer de manière amovible au véhicule (1), et un bras de maintien (5) dirigé à peu près à l'horizontale, réglable en longueur, fixé à la tête de maintien (4), sur lequel repose une extrémité du palier pivotant (11) et sur lequel le vérin pivotant (7) se met également en prise.

10. Dispositif selon l'une quelconque des revendications 1 à 9, caractérisé par un capteur, qui détecte la montée des dents (13) sur un poteau (24) et commande une hydraulique pivotante.
